# EUROPÄISCHE PATENTSCHRIFT

(11) **EP 1 623 136 B1**
(45) Veröffentlichungstag und Bekanntmachung des Hinweises auf die Patenterteilung: **12.09.2007**
(21) Anmeldenummer: 04730856.4
(22) Anmeldetag: 03.05.2004
(51) Int. Cl.: F16D 65/12

(54) **BREMSSCHEIBE MIT REIBRING UND BREMSSCHEIBENTOPF**
BRAKE DISK COMPRISING A FRICTION RING AND A BRAKE DISK POT
DISQUE DE FREIN A BAGUE DE FRICTION ET A POT DE DISQUE DE FREIN

(30) Priorität: 14.05.2003 DE 10321796
(43) Veröffentlichungstag der Anmeldung: 08.02.2006
(73) Patentinhaber: DaimlerChrysler AG, 70327 Stuttgart (DE)
(72) Erfinder: SCHLITZ, Helmut, 71157 Hildrizhausen (DE); NIESTEGGE, Michael, 89177 Ballendorf (DE); RIGOPOULOS, Spyridon, 74321 Bietigheim-Bissingen (DE); SPANGEMACHER, Björn, 71065 Sindelfingen (DE)
(86) Internationale Anmeldenummer: PCT/EP2004/004657
(87) Internationale Veröffentlichungsnummer: WO 2004/102027

(56) Entgegenhaltungen:
- DE-A- 3 432 501
- DE-U- 29 710 533
- GB-A- 1 412 758

## Beschreibung

Die vorliegende Erfindung betrifft eine Bremsscheibe nach dem Oberbegriff des Patentanspruchs 1.

Moderne Hochleistungsbremsscheiben werden in jüngster Zeit immer häufiger aus tribologisch hochbeständigem Material hergestellt. Hierbei können beispielsweise Metall-Matrix-Composits (MMC) oder faserverstärkte Keramiken auf Basis von Siliziumkarbid eingesetzt werden. Für den Rennsport werden bevorzugt Reibringe auf Basis von kohlenstofffaserverstärktem Kohlenstoff (C/C) angewendet. Derartige Materialien machen es 15 erforderlich, einen Reibring und einen Bremsscheibentopf aus unterschiedlichen Materialien darzustellen. Reibring und Bremsscheibentopf bilden gemeinsam die Bremsscheibe.

Es wurden bereits mehrere Vorschläge zur Verbindung von Reibring und Bremsscheibentopf gemacht. Eine häufig verwendete Anbindung zwischen,Reibring und Bremsscheibentopf liegt in einer herkömmlichen Verschraubung. Ein Beispiel für eine derartige Verschraubung wird in der DE 94 22 141 U1 gegeben. Eine weitere Form der Anbindung zwischen Bremsscheibentopf und Reibring besteht in einer Nietanbindung, wie sie in der EP 872 659 A1 beschrieben ist.

Aus der DE 34 32 501 A1 ist eine Bremsscheibe für Scheibenbremsen bekannt, mit einem insbesondere als lüftungskanlfreie Vollscheibe ausgebildeten Ringkörper, der wenigstens einseitig eine von einer Bremsbacke beaufschlagbare Reibfläche trägt und mittels achsparalleler Schrauben mit einem Nabenkörper verschraubt ist, wobei der Ringkörper radial, von seinem Rand ausgehende Schlitze aufweist.

Aus der GB 1412758 sind Achsnaben-Bremsscheiben bekannt, mit einer durch Schrauben oder ähnliche Befestigungsmittel an einer radialen Nabenflache fest gehaltenen Bremsscheibe, wobei die Bremsscheibe mit einem am Innenumfang befindlichen Flansch von einem ringförmigen Klemmelement unter Verwendung von Schrauben oder ähnlichen Befestigungsmitteln gegen eine radiale Flache der Nabe geklemmt ist, wobei die Befestigungsmittel mit Spiel im Flansch ausgebildete Löcher durchdringen, um im Betrieb eine Wärmeausdehnung der Bremsscheibe zuzulassen.

Den genannten Ausführungen ist es gemeinsam, dass sowohl der Reibring als auch der Bremsscheibentopf Ringstege aufweisen, die konzentrisch übereinandergelegt sind, und durch eine Verbindungsanordnung verbunden sind. Dabei sind in der Regel Bohrungen in den Ringstegen vorgesehen, durch die die Verbindungsanordnung geführt wird. Der Nachteil dieser Verbindungsanordnung besteht darin, dass bei der Übertragung des Bremsmomentes Biegespannungen im Ringsteg des Reibringes induziert werden. Derartige Biegespannungen können evtl. in dem vergleichsweise spröden keramischen Reibring Risse hervorrufen. Es bedarf deshalb eines hohen konstruktiven Aufwandes, um eine Rissbildung im Reibring zu unterbinden.

Die Aufgabe der Erfindung besteht darin, eine Bremsscheibe mit einem getrennten Reibring und Bremsscheibentopf bereitzustellen, bei der die Spannungen, die durch die Verbindungsanordnung auf den Reibring wirken, gegenüber dem Stand der Technik reduziert werden.

Die Lösung der Aufgabe besteht in einer Bremsscheibe nach den Merkmalen des Anspruchs 1.

Die erfindungsgemäße Bremsscheibe weist einen Reibring und einen Bremsscheibentopf auf. Hierbei wird unter Bremsscheibentopf allgemein ein Verbindungselement verstanden, das die Anbindung zwischen dem Reibring und der Radnabe gewährleistet. Bei einer direkten Anbindung des Reibrings an die Radnabe, wird die Radnabe selbst als Bremsscheibentopf im Sinne der Erfindung angesehen. Unter Reibring wird der Teil der Bremsscheibe verstanden, der im bremsenden Eingriff mit den Reibbelägen steht.

Sowohl der Bremsscheibentopf als auch der Reibring weisen jeweils einen konzentrischen Ringsteg auf, beide Ringstege sind jeweils mit einer Mehrzahl von Ausnehmungen versehen. Durch die Ausnehmungen der Ringstege von Reibring und Bremsscheibentopf verläuft jeweils eine Verbindungsanordnung.

Es ist ein Stützring vorgesehen, der derart angeordnet ist, dass er gemeinsam mit dem Ringsteg des Bremsscheibentopfes, den Ringsteg des Reibrings sandwichförmig einschließt. Zudem verläuft ein Verbindungsbolzen der Verbindungsanordnung derart, dass er in einer Ausnehmung des Stützrings, die jeweils mit den Ausnehmungen der Ringstege des Bremsscheibentopfes und des Reibrings korrespondieren, gelagert ist.

Somit wird jede Verbindungsanordnung, die durch die Ausnehmungen der Ringstege geführt ist, in jeweils einer Ausnehmung des Stützringes gestützt. Die Verbindungsanordnungen sind auf diese Weise untereinander verbunden. Die Lagerung im Stützring verhindert, dass die einzelnen Verbindungsanordnungen Biegespannungen auf die Ausnehmungen des Ringsteges des Reibrings ausüben. Auf jeder Ausnehmung des Ringsteges des Reibrings wirkt somit eine Umlaufkraft, aus der in Richtung der Kraftübertragung eine Druckspannung resultiert. Eine Druckspannung führt insbesondere bei keramischen Bauteilen deutlich weniger zu einer Rissinduzierung als eine Biegespannung, die ohne den erfindungsgemäßen Stützring auf den Ringsteg des Reibringes wirken würde.

Die Erfindung zeichnet sich dadurch aus, dass die Verbindungsbolzen in die Ausnehmung des Stützrings eingeschrumpft sind. Die Verbindungsbolzen stehen somit senkrecht zum Stützring und werden durch die Ausnehmungen der Ringstege des Reibrings und des Bremsscheibentopfes geführt und auf der Seite des Bremsscheibentopfes verschraubt.

Hierzu ist auf der Seite des Bremsscheibentopfes ein Gewinde im Verbindungsbolzen vorgesehen. Auf diesem Gewinde des Verbindungsbolzens wird eine Mutter aufgesetzt, und derart angezogen, dass der Stützring an den Ringsteg des Reibringes gepresst wird.

Die Ausnehmungen des Bremsscheibentopfes können in einer radiale Richtung nach außen geöffnet sein. Hierdurch wird eine radiale Ausdehnung des Bremsscheibentopfes gewährleistet. Diese radiale Ausdehnung des Bremsscheibentopfes kann auch durch eine Ausnehmung in Form eines Langloches gewährleistet werden.

Insbesondere ist die vorliegende Erfindung vorteilhaft anwendbar auf einen Reibring, der aus einer faserverstärkten Keramik auf der Basis von Siliziumkarbid besteht. Derartige Reibringe weisen eine hohe tribologische Festigkeit auf, sind besonders temperaturbeständig und weisen durch ihre Faserverstärkung eine für Keramiken besonders hohe Schadenstoleranz auf.

Vorteilhafte Ausgestaltungsformen der Erfindung werden anhand der folgenden Figuren näher erläutert.

Dabei zeigen:
- Fig. 1: eine dreidimensionale Darstellung einer Bremsscheibe mit einem Reibring, einem Bremsscheibentopf und einen Stützring,
- Fig. 2: eine Schnittzeichnung durch eine Bremsscheibe mit einem Bremsscheibentopf, einem Reibring und einem Stützring,
- Fig. 3: eine schematische Darstellung der erfindungsgemäßen Verbindungsanordnung zwischen Reibring und Bremsscheibentopf mit einem Stützring,
- Fig. 4: eine schematische Darstellung einer anderen Verbindungsanordnung zwischen Reibring und Bremsscheibentopf mit einem Stützring.

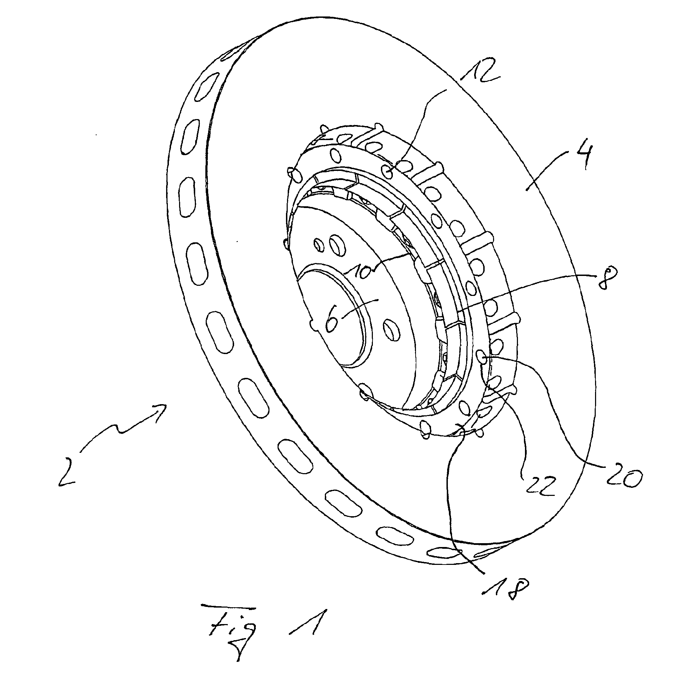

Die in Figur 1 dargestellte Bremsscheibe 2 umfasst einen Reibring 4 und einen Bremsscheibentopf 6. Der Reibring 4 besteht in diesem Ausführungsbeispiel aus einer faserverstärkten Siliziumkarbidkeramik.

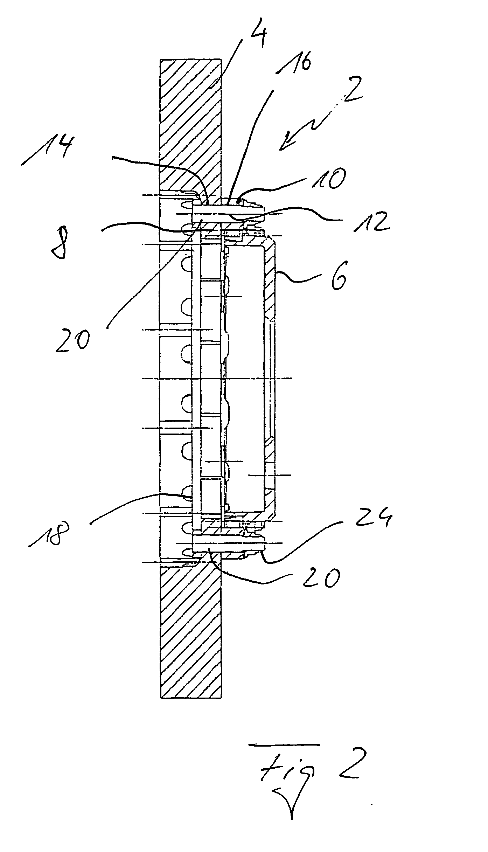

Sowohl der Reibring 4 als auch der Bremsscheibentopf 6 weisen Ringstege 8 und 10 auf. Die Ringstege 8 und 10 sind wiederum mit Ausnehmungen 14 im Reibring und 16 im Bremsscheibentopf versehen. Diese Ausnehmungen 14 und 16 sind in der Schnittdarstellung der Figur 2 näher dargestellt und in Figur 1 nicht sichtbar.

In der Bremsscheibe 2 aus Figur 1 ist zudem ein Stützring 18 dargestellt, der derart angeordnet ist, dass er den Ringsteg 8 des Reibringes 4 zusammen mit dem Ringsteg 10 des Bremsscheibentopfes 6 sandwichförmig umschließt. Sandwichförmig bedeutet hierbei, dass in einer axialen Richtung zuerst der Ringsteg 10 des Bremsscheibentopfes 6, dann der Ringsteg 8 des Reibringes 4 und anschließend der Stützring 18 folgt. Die Ringstege 8 und 10 und der Stützring 18 weisen Ausnehmungen 14, 16 und 22 auf, die derart angeordnet sind, dass sie eine durchgehende Bohrung ergeben.

Durch die Ausnehmungen 14, 16 und 22 ist eine Verbindungsanordnung 12 geführt (vgl. auch Figur 2). Die Verbindungsanordnung 12 umfasst einen Verbindungsbolzen 20 und eine Mutter 24 (Figur 2).

Der Ringsteg 8 des Reibringes 4 weist in umlaufender Richtung Schlitze 34 auf, die radial nach außen zeigen und an ihrem radialen äußeren Ende mit Endbohrungen 36 versehen sind. Die Schlitze 34 sind derart angeordnet, dass sie sich jeweils in gleichem Abstand zwischen den Ausnehmungen 14 im Ringsteg 8 des Reibringes 4 befinden. Durch die Schlitze 34 wird der Ringsteg 8 unterbrochen, was sich positiv auf eine Ausdehnung durch thermische Spannungen auswirkt. Die Endbohrungen 36 dienen zur Vermeidung von Kerbspannungen an den radialen Enden der Schlitze 34.

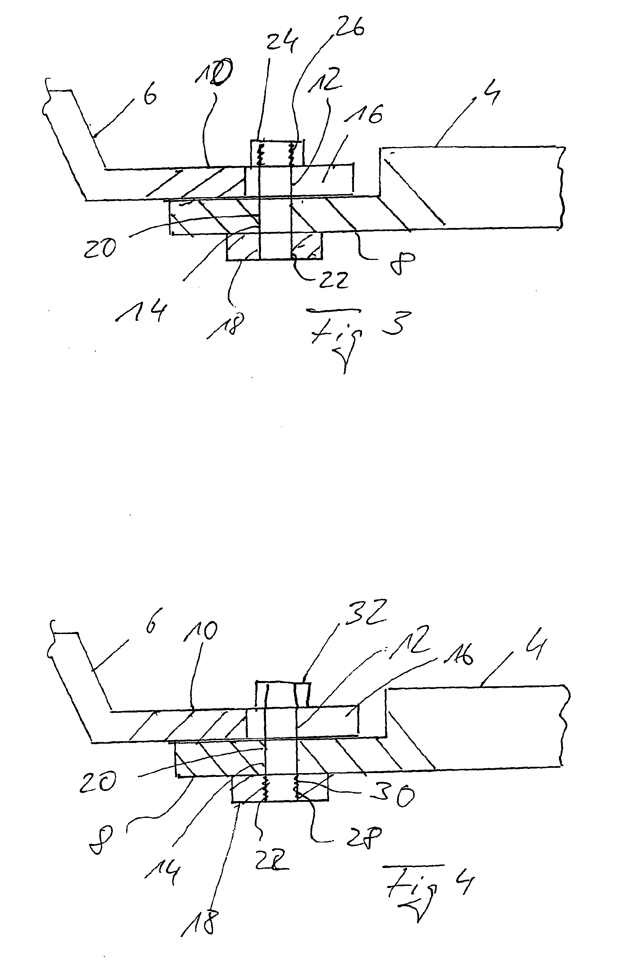

In den Figuren 3 und 4 sind schematisch in zwei Ausgestaltungsformen Verbindungsanordnungen 12 dargestellt. Bei der Bremsscheibenanordnung in den Figuren 3 und 4 handelt es sich nicht um dieselbe Bremsscheibe aus den Figuren 1 und 2. Gleichartige Merkmale sind jedoch mit gleichen Bezugszeichen versehen. Die erfindungsgemäße Anordnung in Figur 3 weist einen Reibring 4 und einen Bremsscheibentopf 6 auf. Beide weisen wiederum einen Ringsteg 8 bzw. 10 auf, die sich gegenseitig überlappen. Die Ringstege 8 und 10 weisen wiederum Ausnehmungen 14 und 16 auf, wobei die Ausnehmung 16 im Bremsscheibentopf 4 in Form einer radialen Nut ausgestaltet ist. Diese längliche Aussparung 16 dient dazu, dass sich der Bremsscheibentopf 6 bei einer Erwärmung in radiale Richtung ausdehnen kann, ohne dass dabei Biegespannungen auf den Reibring 4 übertragen werden.

Gegebenenfalls ist es zweckmäßig, zwischen dem Verbindungsbolzen 20 und der Ausnehmung 16 einen, hier nicht dargestellten Gleitstein einzubringen, der eine radiale Ausdehnung zwischen Verbindungsanordnung 12 und Bremsscheibentopf 6 gewährleistet.

Der Verbindungsbolzen 20 ist in Figur 3 derart angeordnet, dass er in einer Ausnehmung 22 des Stützrings 18 eingeschrumpft ist. Das Einschrumpfen erfolgt üblicherweise durch eine Wärmebehandlung des Stützrings 18, in den der kalte Verbindungsbolzen 20 eingesetzt wird, wobei dieser beim Abkühlen des Stützrings 18 kraftschlüssig mit diesem verbunden ist.

Der Verbindungsbolzen 20 ragt somit senkrecht aus der Ausnehmung 22 des Stützringes 18 heraus. Der Verbindungsbolzen ist durch die Ausnehmungen 14 und 16 der Ringstege 8 und 10 geführt. An seinem, dem Stützring 18 gegenüberliegenden Ende weist der Verbindungsbolzen 20 ein Gewinde 26 auf. Dieses Gewinde 26 wird mit einer Mutter 24 versehen.

Die Mutter wird gegen den Ringsteg 10 des Bremsscheibentopfes angezogen, wobei der Stützring 18 gegen den Ringsteg 8 des Reibringes 4 gedrückt wird. Der kraftschlüssige Sitz zwischen Stützring 18 und Verbindungsbolzen 20 ist dabei ausreichend, um einem Schraubenmoment entgegenzuwirken und eine kraftschlüssige Verbindung zwischen den Ringstegen 8 und 10 und somit zwischen dem Reibring 4 und dem Bremsscheibentopf 6 zu gewährleisten.

Gegebenenfalls kann ein axiales Spiel zwischen Reibring 4 und Bremsscheibentopf 6 notwendig sein, um eine thermische Ausdehnung in axialer Richtung zu gewährleisten. Für diese Zwecke kann ein in Figur 3 aus Gründen der vereinfachten Darstellung nicht gezeigtes Federelement vorgesehen sein. Ein derartiges Federelement kann beispielsweise in Form einer tellerfederförmigen Unterlegscheibe zwischen Reibring 4 und Mutter 24 ausgestaltet sein. Ebenfalls ist es möglich, eine federnde Wirkung durch ein ebenfalls nicht dargestelltes Zwischenelement zwischen Verbindungsbolzen 20 und der Aussparung 16 zu gewährleisten.

Eine schematische Darstellung einer weiteren, nicht unter den Schutzumfang der Ansprüche fallenden Verbindungsanordnung 12 ist in Figur 4 wiedergegeben. Hierbei weist der Verbindungsbolzen 20 an einem Ende einen Schraubenkopf 32 auf. Am anderen Ende umfasst der Verbindungsbolzen 20 ein Gewinde 28. In dieser Ausführungsform wird der Verbindungsbolzen 20 nicht in den Stützring 18 eingeschrumpft, sondern eingeschraubt. Im Weiteren entspricht die Anordnung in Figur 4 der aus Figur 3.

Bei den Figuren 1 bis 4 handelt es sich um bevorzugte Ausführungsformen, in denen die Verbindungsanordnung durch Verschraubungen ausgestaltet ist. Grundsätzlich kann die vorteilhafte Wirkung des Stützringes 18 auch durch andere Verbindungsanordnungen herbeigeführt werden. Hierbei kann es sich beispielsweise um Nietverbindungen handeln oder um Kombinationen von Nietverbindungen und kraftschlüssigen Verbindungen, wie das Aufschrumpfen. Ebenfalls ist eine stoffschlüssige Verbindung, wie z. B. eine Verschweißung oder ein Verlöten, denkbar.

## Patentansprüche

1. Bremsscheibe (2) mit mindestens einem Reibring (4), der über Verbindungsanordnungen (12) mit einem Bremsscheibentopf (6) verbunden ist, wobei der Reibring (4) und der Bremsscheibentopf (6) jeweils einen konzentrischen Ringsteg (8, 10) aufweisen und sich die Ringstege (8, 10) des Reibrings (4) und des Bremsscheibentopfes (6) überlappen, wobei die Verbindungsanordnungen (12) durch Ausnehmungen (14, 16) in den Ringstegen (8, 10) verlaufen, wobei
• ein Stützring (18) vorgesehen ist und
• der Ringsteg (8) des Reibrings (4) zwischen dem Stützring (18) und dem Ringsteg (10) des Bremsscheibentopfes angeordnet ist und
• die Ringstege (8, 10) mit Verbindungsbolzen (20) verbunden sind, die in Ausnehmungen (22) des Stützrings (18) fixiert sind, **dadurch gekennzeichnet, dass**
• die Verbindungsbolzen (20) in die Ausnehmungen (22) im Stützring (18) eingeschrumpft sind.

2. Bremsscheibe nach Anspruch 1,
**dadurch gekennzeichnet,**
**dass** die Verbindungsbolzen (20) an einer Bremsscheibentopf-Seite ein Gewinde (26) aufweisen und mit einer Mutter (24) verschraubt sind.

3. Bremsscheibe nach einem der vorhergehenden Ansprüche,
**dadurch gekennzeichnet,**
**dass** die Ausnehmungen (16) im Bremsscheibentopf (6) radial nach außen geöffnet sind.

4. Bremsscheibe nach einem der vorhergehenden Ansprüche,
**dadurch gekennzeichnet,**
**dass** der Reibring (4) aus einer faserverstärkten Keramik auf Basis von Siliziumkarbid besteht.

## Claims

1. Brake disk (2) with at least one friction ring (4), which is connected by way of joining arrangements (12) to a brake disk hub (6), the friction ring (4) and the bake disk hub (6) each having a concentric annular flange (8, 10) and the annular flanges (8, 10) of the friction ring (4) and the brake disk hub (6) overlapping one another, the joining arrangements (12) running through recesses (14, 16) in the annular flanges (8, 10),
• a support ring (18) being provided, and
• the annular flange (8) of the friction ring (4) being arranged between the support ring (18) and the annular flange (10) of the brake disk hub, and
• the annular flanges (8, 10) being joined by connecting pins (20), which are fixed in recesses (22) in the support ring (18),
**characterized in that** the connecting pins (20) are shrunk into the recesses (22) in the support ring (18).

2. Brake disk according to Claim 1, **characterized in that** the connecting pins (20) have a thread (26) on one side of the brake disk hub and are fastened with a nut (24).

3. Brake disk according to either of the preceding claims, **characterized in that** the recesses (16) in the brake disk hub (6) are open radially outwards.

4. Brake disk according to any one of the preceding claims, **characterized in that** the friction ring (4) is composed of a fibre-reinforced silicon carbide-based ceramic.

## Revendications

1. Disque de frein (2) comportant au moins une bague de friction (4), qui est assemblée à un pot de disque de frein (6) par des dispositifs d'assemblage (12), dans lequel la bague de friction (4) et le pot de disque de frein (6) présentent chacun une nervure annulaire concentrique (8, 10) et les nervures annulaires (8, 10) de la bague de friction (4) et du pot de disque de frein (6) se chevauchent, dans lequel les dispositifs d'assemblage (12) passent à travers des découpes (14, 16) dans les nervures annulaires (8, 10), dans lequel
- il est prévu une bague d'appui (18), et
- la nervure annulaire (8) de la bague de friction (4) est disposée entre la bague d'appui (18) et la nervure annulaire (10) du pot de disque de frein, et
- les nervures annulaires (8, 10) sont assemblées avec des boulons d'assemblage (20), qui sont fixés dans des découpes (22) de la bague d'appui (18),
**caractérisé en ce que**
- les boulons d'assemblage (20) sont contractés dans les découpes (22) dans la bague d'appui (18).

2. Disque de frein selon la revendication 1, **caractérisé en ce que** les boulons d'assemblage (20) comportent un filet (26) sur un côté du pot de disque de frein et sont vissés avec un écrou (24).

3. Disque de frein selon l'une quelconque des revendications précédentes, **caractérisé en ce que** les découpes (16) dans le pot de disque de frein (6) sont ouvertes radialement vers l'extérieur.

4. Disque de frein selon l'une quelconque des revendications précédentes, **caractérisé en ce que** la bague de friction (4) se compose d'une céramique à base de carbure de silicium renforcée par des fibres.
